# FASCICULE DE BREVET EUROPEEN

(11) **EP 2 486 298 B1**
(45) Date de publication et mention de la délivrance du brevet: **04.11.2015**
(21) Numéro de dépôt: 10762675.6
(22) Date de dépôt: 07.10.2010
(51) Int. Cl.: F16D 3/20

(54) **DISPOSITIF D'ACCOUPLEMENT POUR LA TRANSMISSION D'UN COUPLE**
KOPPLUNGSVORRICHTUNG FÜR DREHMOMENTÜBERTRAGUNG
COUPLING DEVICE FOR TRANSMITTING TORQUE

(30) Priorité: 07.10.2009 FR 0956990
(43) Date de publication de la demande: 15.08.2012
(73) Titulaire: Exosun, 33650 Martillac (FR)
(72) Inventeur: PAPONNEAU, François, 33610 CESTAS (FR)
(74) Mandataire: Novagraaf Technologies
(86) Numéro de dépôt international: PCT/EP2010/064986
(87) Numéro de publication internationale: WO 2011/042490

(56) Documents cités:
- EP-A2- 0 098 777
- DE-C- 840 335
- DE-U1-202009 013 366
- FR-A- 348 007
- FR-A- 859 469
- GB-A- 2 138 104
- US-A- 5 823 499
- Böge: "DasTechniker Handbuch", 1 November 2000 (2000-11-01), Friedr. Vieweg & Sohn, Braunschweig ISBN: 3-528-44053-8 page 1255,1260,

## Description

L'invention concerne un dispositif d'accouplement permettant de transmettre un couple entre deux arbres. Voir FR-859 469 A.

### Arrière plan de l'invention

Actuellement, afin de pouvoir transmettre un couple entre deux arbres qui ne se trouvent pas dans le prolongement l'un de l'autre, il est usuel d'assurer cette liaison à l'aide d'un dispositif d'accouplement formant un joint à la Cardan. Au surplus, si la distance est variable entre les deux arbres à relier, l'un de ces arbres doit être télescopique. Un tel dispositif d'accouplement comporte des pièces complexes à réaliser et sont donc chères à produire.

Une autre solution est d'utiliser un manchon flexible en lieu et place du joint à la Cardan. Un tel manchon est réalisé soit en polymère déformable soit sous la forme d'un soufflet métallique. Un inconvénient d'un tel manchon est la fiabilité dans le temps avec des problèmes de vieillissement accéléré.

Un but de l'invention est de fournir un dispositif d'accouplement qui soit à la fois simple et peu cher à produire tout en étant parfaitement fiable dans le temps.

### Résumé de l'invention

A cet effet, il est prévu selon l'invention, un dispositif d'accouplement destiné à transmettre un couple entre un arbre d'entrée et un arbre de sortie comportant chacun une extrémité en vis-à-vis, l'un parmi les arbres d'entrée et de sortie comportant à son extrémité un élément mâle dont une section est de forme externe générale polygonale, et l'autre parmi les arbres une section est de forme interne générale polygonale complémentaire de la forme externe polygonale, les deux éléments mâle et femelle étant destinés à coopérer l'un avec l'autre par engrènement avec un jeu fonctionnel, et l'élément mâle étant rapporté sur l'extrémité de l'arbre sur lequel il est situé, un deuxième jeu fonctionnel existe entre l'élément mâle et l'extrémité de l'arbre sur lequel il est situé, l'élément mâle et ladite extrémité de l'arbre coopérant l'un avec l'autre par engrènement avec le deuxième jeu fonctionnel.

Ainsi, la présence des jeux fonctionnels permettent un rotulage entre les deux de manière simple tout en assurant une parfaite fiabilité dans le temps.

Avantageusement, mais facultativement, le dispositif d'accouplement présente en plus au moins l'une des caractéristiques suivantes :
- la forme externe polygonale étant inscrite dans un cercle, une valeur du jeu fonctionnel est inférieure à une valeur d'une flèche au cercle d'un coté de la forme externe polygonale formant une corde du cercle ;
- les formes interne et externe polygonales comportent entre trois et douze cotés ;
- les formes interne et externe polygonales comportent quatre cotés ;
- l'élément mâle comporte plusieurs pièces empilées l'une contre l'autre selon un axe longitudinal de l'arbre sur l'extrémité duquel l'élément mâle est situé ;
- l'élément femelle forme l'extrémité d'un arbre creux de section la forme interne polygonale ;
- l'élément femelle forme l'extrémité d'un arbre creux de section la forme interne polygonale ;
- l'élément femelle forme une extrémité matricée d'un arbre creux de section cylindrique
- l'élément mâle comportant un orifice coaxial, l'orifice coaxial et une circonférence externe de l'extrémité de l'arbre sont de forme polygonale ; et
- les formes polygonales de l'orifice coaxial et de la circonférence externe comportent entre trois et douze cotés.

### Brève description des figures

D'autres caractéristiques et avantages de l'invention apparaitront lors de la description ci-après d'un mode de réalisation de l'invention. Aux dessins annexés :
- la figure 1 est une vue tridimensionnelle éclatée d'un dispositif d'accouplement selon l'invention monté entre deux arbres ;
- la figure 2 est une vue en coupe longitudinale de deux arbres accouplés avec le dispositif d'accouplement selon l'invention ; et
- la figure 3 est une section en coupe du dispositif d'accouplement des figures 1 et 2.

### Description détaillée de l'invention

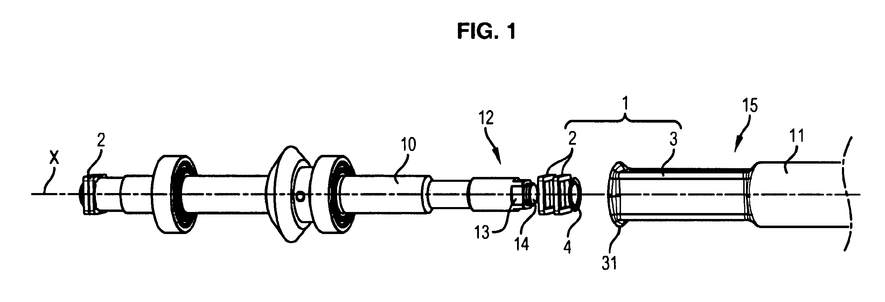

En référence à la figure 1, nous allons décrire un mode de réalisation d'un dispositif d'accouplement 1 selon l'invention. Ce dispositif d'accouplement 1 est destiné à permettre la transmission d'un couple entre un arbre d'entrée 10 et un arbre de sortie 11. Il comporte un élément mâle 2 et un élément femelle 3, tous deux destinés à coopérer l'un avec l'autre par engrènement. L'arbre d'entrée 10 comporte une extrémité 12 sur laquelle est positionné l'élément mâle 2. Ici, dans le mode de réalisation illustré à la Figure 1, l'extrémité 12 comporte sur un tronçon un ensemble de méplat 13, ici au nombre de quatre et uniformément répartis sur une circonférence de l'extrémité 12 de l'arbre d'entrée 10. S'étendant en saillie de l'extrémité 12 selon un axe longitudinal X de l'arbre d'entrée 10, un tronçon cylindrique de révolution 14 présente un diamètre inférieur à une distance entre deux méplats 13 diamétralement opposés. Le nombre de méplats permet de définir, en section, une forme polygonale d'une circonférence de l'extrémité 12 de l'arbre d'entrée 10. En particulier, ce nombre de méplats peut être compris entre trois et douze.

L'élément mâle présente, en section perpendiculaire à l'axe longitudinal X, une forme externe généralement polygonale. Dans le mode de réalisation illustré dans les figures, la forme polygonale comporte quatre cotés formant un carré. L'élément mâle 2 est ici formé de deux pièces identiques qui se présentent, ici, sous la forme de carrés. Chacune des pièces formant l'élément mâle 2 est percé d'un orifice coaxial 30, lui-même carré, de sorte à ce que les deux pièces formant l'élément mâle 2 puissent être enfilées à coulissement sur les méplats 13 de l'extrémité 12 de l'arbre d'entrée 10. De manière générale, l'orifice coaxial présente une forme complémentaire de la circonférence de l'extrémité 12 de l'arbre d'entrée 10 sur laquelle l'éléments mâle est destiné à être enfilé à coulissement. Un jeu fonctionnel 131 existe entre le méplat 13 de l'extrémité 12 de l'arbre d'entrée 10 et un coté 24 de l'orifice coaxial 30 situé en regard. Ce jeu est identique entre chacun des méplats 13 et chacun des cotés 24 de l'orifice coaxial 30 situé en regard respectivement. Ce jeu fonctionnel 131 est choisi de sorte à ce qu'au moins l'arbre d'entrée 10 entraîne, lors d'un mouvement de rotation autour de son axe longitudinal X, les pièces de l'élément mâle 2 dans ce mouvement de rotation. Les pièces formant l'élément mâle 2 sont maintenues en place sur l'extrémité 12 de l'arbre d'entrée 10 à l'aide d'un anneau 4 venant s'emmancher à coulissement et en force sur le tronçon cylindrique 14. L'anneau 4 est de type « Grifaxe » et est bloqué sur le tronçon cylindrique 14 par arc-boutement, une fois cet anneau 4 mis en place. L'anneau 4 forme alors un moyen de blocage en translation le long de l'axe longitudinal X de l'élément mâle 2 sur l'extrémité 12 de l'arbre d'entrée 10. Ainsi, l'élément mâle ne peut s'échapper de l'extrémité 12 de l'arbre d'entrée 10. En variante de réalisation, les moyens de blocage comprennent un circlips ou une goupille ou encore tout autre moyen connu permettant d'assurer le blocage en translation le long de l'axe longitudinal X sur les méplats 13 des pièces formant l'élément mâle 2 sur l'extrémité 12 de l'arbre d'entrée 10. En variante, l'élément mâle 2 comporte une ou plusieurs pièces.

Dans une autre variante de réalisation, l'élément mâle 2 est venu de matière avec l'extrémité 12 de l'arbre d'entrée 10.

Dans d'autres variantes de réalisation, l'élément mâle 2 peut être de toute forme polygonale. En particulier, cette forme polygonale peut comporter entre 3 et 12 côtés. Il en va de même pour la forme de l'orifice coaxial 30.

Dans une variante supplémentaire de réalisation, la forme polygonale comporte des sommets arrondis. Il en va de même pour la circonférence de l'extrémité 12 de l'arbre d'entrée 10.

L'arbre de sortie 11 comporte une extrémité 15 sur laquelle est située l'élément femelle 3. L'élément femelle 3 est, en section perpendiculaire à l'axe longitudinal de l'arbre de sortie, de forme interne générale polygonale qui présente ici quatre cotés. L'élément femelle 3 peut se terminer, comme cela est illustré sur les figures, par une extrémité évasée 31 qui lui confère une forme d'entonnoir. Cette forme d'entonnoir facilite la mise en place de l'élément femelle 3 sur l'élément mâle 2 lors d'un montage du dispositif d'accouplement 1 selon l'invention entre l'arbre d'entrée 10 et l'arbre de sortie 11. La forme polygonale de l'élément femelle 3 présente une forme complémentaire de celle de l'élément mâle 2 situé à l'extrémité 12 de l'arbre d'entrée 10. L'élément femelle 3 est, ici, venu de matière avec l'extrémité 15 de l'arbre de sortie 11. De plus, dans le mode de réalisation illustré au figures, l'élément femelle 3 est réalisé par matriçage de l'extrémité 15 de l'arbre de sortie 11 qui se présente alors sous la forme d'un tube creux cylindrique de révolution. En variante de réalisation, l'élément femelle 3 est une pièce rapportée par soudage ou tout autre moyen sur l'extrémité 15 de l'arbre de sortie 11.

Dans d'autres variantes de réalisation, l'élément femelle 3 peut être de toute forme polygonale. En particulier, cette forme polygonale peut comporter entre 3 et 12 côtés.

Dans une variante supplémentaire de réalisation, la forme polygonale de l'élément femelle 3 comporte des sommets arrondis.

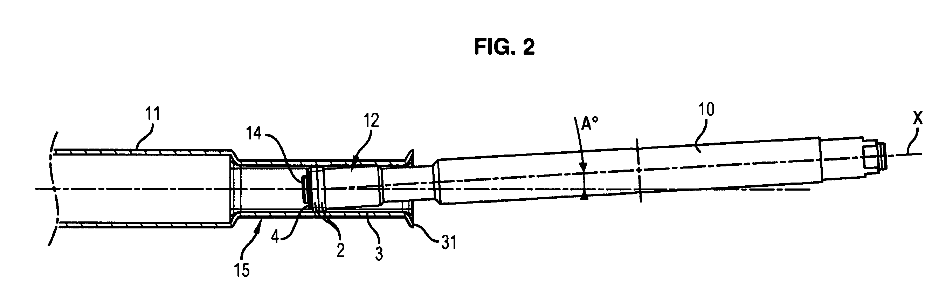

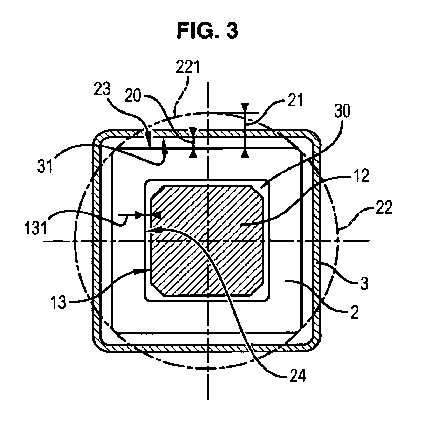

En référence à la Figure 2 et à la Figure 3, nous allons maintenant décrire le fonctionnement du dispositif d'accouplement 1 selon l'invention. Lors d'un montage, l'arbre de sortie 11 est emmanché sur l'arbre d'entrée 10 (ou inversement) de sorte à ce que l'extrémité femelle 3 accueille, dans un mouvement de translation, l'extrémité mâle 2. La complémentarité de forme de l'élément femelle 3 et de l'élément mâle 2 permet que les extrémités respectives 12 et 15 des arbres d'entrée 10 et de sortie 11 de coopérer l'un avec l'autre par engrènement et ainsi de transmettre un couple de l'arbre d'entrée 10 à l'arbre de sortie 11.

Comme illustré à la Figure 3, une fois l'élément mâle 2 introduit dans l'élément femelle 3, un jeu fonctionnel 20 existe entre un côté 23 de la forme externe polygonale de l'élément mâle 2 et un côté 31 de la forme interne polygonale de l'élément femelle 3 situé en regard du côté 23 de la forme externe polygonale de l'élément mâle 2. Une valeur du jeu fonctionnel 20 est inférieure à une valeur d'une flèche 21. Il est à noter qu'il en va de manière similaire concernant une valeur du jeu fonctionnel 131. La flèche 21 est définie comme suit :
- le polygone de la forme externe polygonale de l'élément mâle 2 est inscrit dans un cercle 22,
- les côtés 23 de ce polygone forment alors des cordes de ce cercle 22,
- la flèche 21 correspond alors à un segment reliant les milieux d'une 23 des cordes et d'un arc du cercle 221 en regard de cette corde, les extrémités de la corde 21 étant celle de l'arc de cercle 221.

Le jeu fonctionnel 20, associé au jeu fonctionnel 131, permet un rotulage entre l'arbre d'entrée 10 et l'arbre de sortie 11, une fois ceux-ci accouplés, selon un angle maximal A tout en permettant la transmission par engrènement d'un couple entre l'arbre d'entrée 10 et l'arbre de sortie 11. En variante, une valeur du jeu fonctionnel 131 est identique à celle du jeu fonctionnel 20. Ainsi, Les jeux fonctionnels sont tous identiques dans le dispositif d'accouplement 1 selon l'invention.

Il est possible d'adapter la capacité de transmission de couple en jouant sur le nombre de pièces formant l'élément mâle 2 et/ou le nombre de côtés des formes polygonales externe de l'élément mâle 2 et interne de l'élément femelle 3. La valeur du jeu fonctionnel 20 et/ou du jeu fonctionnel 131 permet, quant à elle, d'ajuster la valeur de l'angle maximal A pour le rotulage permis entre l'arbre d'entrée 10 et l'arbre de sortie 11 et aussi d'adapter la capacité de transmission de couple (car plus il y a de jeu, moins de couple peut être transmis de l'arbre d'entrée 10 à l'arbre de sortie 11).

En variante de réalisation, seul l'un des jeux fonctionnels 20, 131 est présent, l'autre étant alors quasi-nul.

## Revendications

1. Dispositif d'accouplement (1) destiné à transmettre un couple entre un arbre d'entrée (10) et un arbre de sortie (11), comportant chacun une extrémité en vis-à-vis, le dispositif d'accouplement comprenant un élément mâle (2 ; 13) et un élément femelle (3 ; 30) destinée à coopérer l'un avec l'autre, l'un (10) parmi les arbres d'entrée et de sortie comportant à son extrémité (12) l'élément mâle (2 ; 13) ayant une section de forme externe générale polygonale, et l'autre (11) parmi les arbres d'entrée et de sortie comportant à son extrémité (15) l'élément femelle (3 ; 30) ayant une section de forme interne générale polygonale complémentaire de la forme externe polygonale de l'élément mâle, les deux éléments mâle et femelle étant destinés à coopérer l'un avec l'autre par engrènement à l'aide de moyens permettant un désalignement axial prédéterminé des arbres d'entrée et de sortie, de façon que l'élément mâle est rapporté sur l'extrémité de l'arbre sur lequel il est situé en laissant un jeu fonctionnel (131) exister entre l'élément mâle et l'extrémité de l'arbre sur lequel il est situé, l'élément mâle engrènant l'élément femelle avec un jeu fonctionnel prédéterminé (20) existant entre la forme externe polygonale de l'élément mâle et la forme interne polygonale de l'élément femelle, les deux jeux fonctionnels formant les moyens permettant un désalignement axial des arbres d'entrée et de sortie, et **caractérisé en ce que**, la forme externe polygonale étant inscrite dans un cercle (22), une valeur du jeu fonctionnel (20) est inférieure à une valeur d'une flèche (21) au cercle (22) d'un coté (23) de la forme externe polygonale formant une corde du cercle (22).

2. Dispositif selon la revendication 1, **caractérisé en ce que** les formes interne et externe polygonales comportent entre trois et douze cotés.

3. Dispositif selon la revendication 2, **caractérisé en ce que** les formes interne et externe polygonales comportent quatre cotés.

4. Dispositif selon l'une des revendications 1 ou 3, **caractérisé en ce que** l'élément mâle comporte plusieurs pièces empilées l'une contre l'autre selon un axe longitudinal (X) de l'arbre sur l'extrémité duquel l'élément mâle est situé.

5. Dispositif selon l'une des revendications 1 à 4, **caractérisé en ce que** l'élément femelle forme l'extrémité d'un arbre creux de section la forme interne polygonale.

6. Dispositif selon l'une des revendications 1 à 4 **caractérisé en ce que** l'élément femelle forme une extrémité matricée d'un arbre creux de section cylindrique.

7. Dispositif selon l'une des revendications 1 à 6, **caractérisé en ce que**, l'élément mâle comportant un orifice coaxial (30), l'orifice coaxial et une circonférence externe de l'extrémité de l'arbre sont de forme polygonale

8. Dispositif selon la revendication 7, **caractérisé en ce que** les formes polygonales de l'orifice coaxial et de la circonférence externe comportent entre trois et douze cotés.

## Patentansprüche

1. Kupplungsvorrichtung (1), die ausgelegt ist, um ein Drehmoment zwischen einer Eingangswelle (10) und einer Ausgangswelle (11) zu übertragen, die jeweils ein gegenüber liegendes Ende umfassen, wobei die Kupplungsvorrichtung ein Einsteckelement (2; 13) und ein Aufnahmeelement (3; 30) umfasst, ausgelegt, um miteinander zusammenzuarbeiten, wobei eine (10) der Eingangs- und Ausgangswellen an ihrem Ende (12) das Einsteckelement (2; 13) umfasst, das einen Abschnitt mit einer im Allgemeinen polygonalen externen Form aufweist, und die andere (11) der Eingangs- und Ausgangswellen an ihrem Ende (15) das Aufnahmeelement (3; 30) umfasst, das einen Abschnitt mit einer im Allgemeinen polygonalen internen Form aufweist, die komplementär zur polygonalen externen Form des Einsteckelements ist, wobei die zwei Einsteck- und Aufnahmeelemente ausgelegt sind, um miteinander durch Eingreifen mit Hilfe von Mitteln zusammenzuarbeiten, die eine vorbestimmte versetzte axiale Ausrichtung der Eingangs- und Ausgangswelle ermöglichen, so dass das Einsteckelement auf dem Ende der Welle aufmontiert wird, auf dem es sich befindet, wobei ein funktionales Spiel (131) zwischen dem Einsteckelement und dem Ende der Welle, auf der es sich befindet, bestehen gelassen wird, wobei das Einsteckelement das Aufnahmeelement mit einem vorbestimmten funktionellen Spiel (20) eingreift, das zwischen der polygonalen externen Form des Einsteckelements und der polygonalen internen Form des Aufnahmeelements besteht, wobei die zwei funktionellen Spiele die Mittel bilden, die eine versetzte axiale Ausrichtung der Eingangs- und Ausgangswelle ermöglichen, und **dadurch gekennzeichnet, dass**, da die polygonale externe Form in einen Kreis (22) eingeschrieben ist, ein Wert des funktionellen Spiels (20) kleiner als ein Wert einer Segmenthöhe (21) zum Kreis (22) einer Seite (23) der polygonalen externen Form ist, die eine Sehne des Kreises (22) bildet.

2. Vorrichtung nach Anspruch 1, **dadurch gekennzeichnet, dass** die polygonalen internen und externen Formen zwischen drei und zwölf Seiten umfassen.

3. Vorrichtung nach Anspruch 2, **dadurch gekennzeichnet, dass** die polygonalen internen und externen Formen vier Seiten umfassen.

4. Vorrichtung nach einem der Ansprüche 1 oder 3, **dadurch gekennzeichnet, dass** das Einsteckelement mehrere Teile umfasst, die gegeneinander gemäß einer Längsachse (X) der Welle gestapelt sind, auf deren Ende sich das Einsteckelement befindet.

5. Vorrichtung nach einem der Ansprüche 1 bis 4, **dadurch gekennzeichnet, dass** das Aufnahmeelement das Ende einer hohlen Welle mit polygonalem internen Schnitt bildet.

6. Vorrichtung nach einem der Ansprüche 1 bis 4, **dadurch gekennzeichnet, dass** das Aufnahmeelement ein geprägtes Ende einer hohlen Welle mit zylindrischem Schnitt bildet.

7. Vorrichtung nach einem der Ansprüche 1 bis 6, **dadurch gekennzeichnet, dass** das Einsteckelement eine koaxiale Öffnung (30) umfasst, wobei die koaxiale Öffnung und ein äußerer Umfang des Endes der Welle eine polygonale Form aufweisen.

8. Vorrichtung nach Anspruch 7, **dadurch gekennzeichnet, dass** die polygonalen Formen der koaxialen Öffnung und des äußeren Umfangs zwischen drei und zwölf Seiten aufweisen.

## Claims

1. Coupling device (1) intended to transmit a torque between an input shaft (10) and an output shaft (11), each comprising an end opposite one another, the coupling device including a male element (2; 13) and a female element (3; 30) intended to cooperate one with the other, one (10) of the input and output shafts comprising, at its end (12), the male element (2; 13) having a general polygonal outer cross-section, and the other (11) among the input and output shafts comprising, at its end (15), the female element (3; 30) having an general polygonal internal cross-section complementary to the outer polygonal shape of the male element, the two male and female elements being intended to cooperate one with the other by meshing by way of means enabling a predetermined axial misalignment of the input and output shafts, so that the male element is attached on the end of the shaft on which it is located allowing for functional play (131) to exist between the male element and the end of the shaft on which it is located, the male element meshing with the female element with a predetermined functional play (20) existing between the outer polygonal shape of the male element and the inner polygonal shape of the female element, the two functional plays forming the means enabling an axial misalignment of the input and output shafts, and **characterized in that**, as the outer polygonal shape is inscribed in a circle (22), a value of the functional play (20) is lower than a value of an sagitta (21) to the circle (22) on one side (23) of the outer polygonal shape forming a chord of the circle (22).

2. Device according to claim 1, **characterized in that** the inner and outer polygonal shapes comprise between three and twelve sides.

3. Device according to claim 2, **characterized in that** the inner and outer polygonal shapes comprise four sides.

4. Device according to one of claims 1 or 3, **characterized in that** the male element has a plurality of parts stacked one against another along a longitudinal axis (X) of the shaft on the end of which the male element is located.

5. Device according to one of claims 1 to 4, **characterized in that** the female element forms the end of a hollow shaft having an inner polygonal cross-section.

6. Device according to one of claims 1 to 4, **characterized in that** the female element forms an end forged with a hollow shaft having a cylindrical cross-section.

7. Device according to one of claims 1 to 6, **characterized in that**, as the male element has a coaxial orifice (30), the coaxial orifice and an outer circumference of the end of the shaft are polygonal.

8. Device according to claim 7, **characterized in that** the polygonal shapes of the coaxial orifice and the outer circumference comprise between three and twelve sides.
